# EUROPEAN PATENT APPLICATION

(11) **EP 4 424 948 A1**
(43) Date of publication of application: **04.09.2024**
(21) Application number: 24156763.5
(22) Date of filing: 09.02.2024
(51) Int. Cl.: E04G 21/32, A62B 35/00, F16G 11/04, F16G 11/06

(54) **AN ATTACHMENT ARRANGEMENT FOR THE ATTACHMENT OF A FIRST ELEMENT TO A SECOND ELEMENT**

(30) Priority: 28.02.2023 SE 2350226
(71) Applicant: CWL Patent AB, 792 22 Mora (SE)
(72) Inventor: HEDLUND, Rolf, 792 00 Mora (SE)
(74) Representative: Ehrner & Delmar Patentbyrå AB

(57) **Abstract**

An attachment arrangement (500; 600; 700; 900) for the attachment of a first element (102) to a second element (200), the first element (102) comprising a wire (104) having a longitudinal extension (106). The attachment arrangement (500; 600; 700; 900) comprises the first element (102) and an attachment member (508; 608; 708) attachable to the wire (104) of the first element (102). The attachment member (508; 608; 708) is attachable to the second element (200). The attachment member (508; 608; 708) forms three or more through-holes (510; 610; 710). Three or more of the three or more through-holes (510; 610; 710) are configured to receive one or more longitudinal portions (112a-c) of the wire (104). In each one (510; 610; 710) of the three or more of the three or more through-holes (510; 610; 710) the attachment member (508; 608; 708) is configured to hold a longitudinal portion (112a-c) of the wire (104) for forming a first loop (114) of the wire (104) and a second loop (134) of the wire (104), the first loop (114) being positioned at least partly outside the three or more through-holes (510; 610; 710), so as to lock the wire (104) in relation to the attachment member (508; 608; 708).

## Description

### Technical field

Aspects of the present invention relate to an attachment arrangement for the attachment of a first element to a second element, the first element comprising a wire having a longitudinal extension.

### Background

Conventionally, roof or wall equipment and/or equipment devices may be mounted or attached to the roof or wall of a building by way of attachments. For example, the roof or wall equipment and/or equipment devices may include ladders, walkways and steps for users, snow rails or fences for preventing snow from sliding off of the roof, ridge and roof foot rails, guardrails and safety wires to which a user may be connected via a safety rope or line having a carabiner or any other loop element. Conventionally, the safety wire may extend along the roof and/or wall of the building.

### Summary

The inventors of the present invention have found drawbacks in conventional solutions for attaching roof or wall equipment and/or equipment devices, especially wires or safety wires, to the roof and/or wall of a building. For example, some conventional solutions do not a provide a sufficient attachment of the roof or wall equipment and/or equipment devices, such as a wire, to the roof and/or wall. For example, some conventional solutions for attaching wires are too complex to apply by users.

An object of embodiments of the invention is to provide a solution which mitigates or solves drawbacks and problems of conventional solutions.

The above and further objects are solved by the subject matter of the independent claim. Further advantageous embodiments of the invention can be found in the dependent claims.

According to a first aspect of the invention, the above mentioned and other objects are achieved with an attachment arrangement for the attachment of a first element to a second element, the first element comprising a wire having a longitudinal extension, wherein the attachment arrangement comprises
the first element, and
an attachment member attachable to the wire of the first element,
wherein the attachment member is attachable to the second element,
wherein the attachment member forms three or more through-holes,
wherein three or more of the three or more through-holes are configured to receive one or more longitudinal portions of the wire, and
wherein in each one of the three or more of the three or more through-holes the attachment member is configured to hold a longitudinal portion of the wire for forming a first loop of the wire and a second loop of the wire, the first loop being positioned at least partly outside the three or more through-holes, so as to lock the wire in relation to the attachment member.

An advantage of the attachment arrangement according to the first aspect is that the attachment of the wire to a roof or wall is improved, and or to the second element, which may be a bracket, or console, attached to the roof or wall. An advantage of the attachment arrangement according to the first aspect is that the strength of the attachment of the wire to a roof or wall is improved or enhanced, or that the wire is more strongly secured to the roof or wall. An advantage of the attachment arrangement according to the first aspect is that the flexibility of the attachment of the wire to a roof or wall is improved. For example, by way of the first and second loops of the wire, a quicker and less complicated procedure for the user to attach the wire to the roof or wall in relation to conventional solutions is provided. Thus, an advantage of the attachment arrangement according to the first aspect is that the process of attaching the wire to a roof or wall is facilitated and made more efficient. For example, the first and second loops can be easily formed from the wire by a user. For example, no screws, rivets, bolts and nuts are required to attach the wire to the attachment member. For example, by way of embodiments of the attachment arrangement according to the first aspect, two longitudinal portions of the wire do not have to meet and pass one another in the same through-hole.

For some embodiments, it may be defined that the attachment member is directly or indirectly attachable to the second element. For some embodiments, the second loop of the wire may be positioned at least partly outside the three or more through-holes.

According to an advantageous embodiment of the attachment arrangement according to the first aspect, the attachment arrangement comprises one or more locking members, wherein the first loop of the wire is configured to receive the locking member so as to lock the wire in relation to the attachment member. For example, by way of the first loop of the wire and the locking member, an even quicker and less complicated procedure for the user to attach the wire to the roof or wall in relation to conventional solutions is provided. For example, the first loop can be easily formed from the wire and the locking member can be easily inserted into the first loop by a user. For some embodiments,
the attachment arrangement may comprise a second locking member, wherein the second loop of the wire is configured to receive the second locking member so as to lock the wire in relation to the attachment member.

According to a further advantageous embodiment of the attachment arrangement according to the first aspect, the locking member comprises one or more portions of the attachment member. For some embodiments, the second locking member may comprise a second portion of the attachment member. An advantage of these embodiments is that the attachment of the wire to the roof or wall is further improved. An advantage of this embodiment is that the flexibility of the attachment of the wire to a roof or wall is further improved. An advantage of this embodiment is that the process of attaching the wire to a roof or wall is further facilitated and made more efficient.

According to another advantageous embodiment of the attachment arrangement according to the first aspect, one of the three or more through-holes is configured to receive and hold an attachment element attachable to the second element. An advantage of this embodiment is that the attachment of the wire to the roof or wall is further improved. An advantage of this embodiment is that the flexibility of the attachment of the wire to a roof or wall is further improved. An advantage of this embodiment is that the process of attaching the wire to a roof or wall is further facilitated and made more efficient.

According to a further advantageous embodiment of the attachment arrangement according to the first aspect, the attachment member comprises a central portion and an outer portion surrounding the central portion, wherein the central portion forms the through-hole configured to receive and hold the attachment element. An advantage of this embodiment is that the attachment of the wire to the roof or wall is further improved. By placing the through-hole configured to receive and hold the attachment element in the central portion of the attachment member, an advantageous distribution or balancing of forces acting on the attachment member is provided. For example, any lateral or rotation forces acting on the attachment member, which may originate from pull forces of the wire, are efficiently reduced.

According to another advantageous embodiment of the attachment arrangement according to the first aspect, the attachment arrangement comprises the attachment element.

According to yet another advantageous embodiment of the attachment arrangement according to the first aspect, the attachment element has a longitudinal extension and one or more external threads. An advantage of this embodiment is that the attachment of the wire to the roof or wall is further improved. An advantage of this embodiment is that the flexibility of the attachment of the wire to a roof or wall is further improved. An advantage of this embodiment is that the process of attaching the wire to a roof or wall is further facilitated and made more efficient. By way of the external thread of the attachment element, the attachment element may be attached, for example with the supplement of one or more nuts, to the attachment member and/or to the second element in swift and efficient manner while providing a strong and reliable attachment.

According to still another advantageous embodiment of the attachment arrangement according to the first aspect, the attachment element is rigid.

According to an advantageous embodiment of the attachment arrangement according to the first aspect, the wire comprises the locking member, wherein the locking member comprises a second longitudinal portion of the wire. An advantage of this embodiment is that the attachment of the wire to the roof or wall is further improved. An advantage of this embodiment is that the flexibility of the attachment of the wire to a roof or wall is further improved. An advantage of this embodiment is that the process of attaching the wire to a roof or wall is further facilitated and made more efficient, for example since the locking member is always at hand for the user when the wire is present.

According to a further advantageous embodiment of the attachment arrangement according to the first aspect, the locking member, or the second longitudinal portion, comprises an end portion of the wire. An advantage of this embodiment is that the attachment of the wire to the roof or wall is further improved.

According to another advantageous embodiment of the attachment arrangement according to the first aspect, the locking member comprises a locking piece. Thus, the locking member may be defined as a separate member distinguished from, i.e. not a portion of the wire and/or of the attachment member. An advantage of this embodiment is that the attachment of the wire to the roof or wall is further improved. An advantage of this embodiment is that the flexibility of the attachment of the wire to a roof or wall is further improved. For some embodiments, the second locking member may comprise a second locking piece.

According to another advantageous embodiment of the attachment arrangement according to the first aspect, the attachment member forms four or more through-holes, wherein one of the four or more through-holes is configured to receive and hold an attachment element attachable to the second element. An advantage of this embodiment is that the attachment of the wire to the roof or wall is further improved. An advantage of this embodiment is that the process of attaching the wire to a roof or wall is further facilitated and made more efficient.

According to yet another advantageous embodiment of the attachment arrangement according to the first aspect, one or more of the attachment member and attachment element is/are attachable, such as directly or indirectly attachable, to the second element which comprises a bracket attachable to a structure of a building. The structure of the building may, for example, be, or comprise, a roof or a wall of the building.

According to still another advantageous embodiment of the attachment arrangement according to the first aspect, the attachment member comprises a first end portion and a second end portion,
wherein the attachment member has a longitudinal extension extending from the first end portion to the second end portion, and
wherein each one of the three or more through-holes has a longitudinal extension extending in the direction of the longitudinal extension of the attachment member.

An advantage of this embodiment is that the attachment of the wire to the roof or wall is further improved. An advantage of this embodiment is that the process of attaching the wire to a roof or wall is further facilitated and made more efficient.

According to an advantageous embodiment of the attachment arrangement according to the first aspect, the attachment member forms a channel which opens to one of the three or more through-holes, wherein the channel is configured to receive an attachment unit for locking one or more longitudinal portions of the wire held in the through-hole to which the channel opens. An advantage of this embodiment is that the attachment of the wire to the roof or wall is further improved. An advantage of this embodiment is that the strength of the attachment of the wire to a roof or wall is further enhanced. An advantage of this embodiment is that the flexibility of the attachment of the wire to a roof or wall is further improved. The combination of the attachment unit in the channel and the first loop of the wire provides an especially advantageous, strong and secure attachment of the wire to a roof or wall.

According to a further advantageous embodiment of the attachment arrangement according to the first aspect, the channel has a longitudinal extension extending in a direction transverse to the direction of the longitudinal extension of the attachment member. An advantage of this embodiment is that the attachment of the wire to the roof or wall is further improved. An advantage of this embodiment is that the strength of the attachment of the wire to a roof or wall is further enhanced.

According to another advantageous embodiment of the attachment arrangement according to the first aspect, the channel comprises one or more inner surfaces,
wherein the inner surface comprises, or forms, one or more internal threads, and
wherein the one or more internal threads is/are configured for the engagement with one or more external threads of the attachment unit.

An advantage of this embodiment is that the attachment of the wire to the roof or wall is further improved. An advantage of this embodiment is that the strength of the attachment of the wire to a roof or wall is further enhanced. An advantage of this embodiment is that the process of attaching the wire to a roof or wall is further facilitated and made more efficient.

According to still another advantageous embodiment of the attachment arrangement according to the first aspect, the attachment arrangement comprises the attachment unit.

According to yet another advantageous embodiment of the attachment arrangement according to the first aspect, the attachment member is made of a material comprising or consisting of a metal or a metal alloy. For some embodiments, the wire may be made of a material comprising or consisting of a metal or a metal alloy. An advantage of these embodiments is that the attachment of the wire to the roof or wall is further improved. An advantage of this embodiment is that the strength of the attachment of the wire to a roof or wall is further enhanced. According to this embodiment, the attachment member and/or attachment arrangement can be manufactured in an efficient manner. However, other materials for the attachment member are possible, such as a polymer or a polymer composite.

According to a second aspect of the invention, the above mentioned and other objects are achieved with an installation comprising
a structure of a building,
said second element, which is attached to the structure, and
an attachment arrangement according to any one of the embodiments disclosed above or below, wherein the structure comprises one or more of a roof and wall.

According to a third aspect of the invention, the above mentioned and other objects are achieved with a roof or wall installation, such as a roof installation, comprising one or more attachment arrangements according to any one of the embodiments disclosed above or below.

According to a fourth aspect of the invention, the above mentioned and other objects are achieved with a roof or wall arrangement comprising a roof or wall, for example a roof arrangement comprising a roof, and one or more of the group of:
- an attachment arrangement according to any one of the embodiments disclosed above or below; and
- a roof or wall installation according to any one of the embodiments disclosed above or below.

The above-mentioned features and embodiments of the attachment arrangement, the roof or wall installation and the roof or wall arrangement, respectively, may be combined in various possible ways providing further advantageous embodiments.

Further advantageous embodiments of the attachment arrangement, the roof installation and the roof arrangement according to the present invention and further advantages with the embodiments of the present invention emerge from the detailed description of embodiments.

### Brief Description of the Drawings

Embodiments of the invention will now be illustrated, for exemplary purposes, in more detail by way of embodiments and with reference to the enclosed drawings, where similar references are used for similar parts, in which:
- Figure 1: is a schematic sectional front view of a first embodiment of the attachment arrangement according to the first aspect of the invention;
- Figure 2: is a schematic sectional side view of the attachment arrangement of figure 1;
- Figure 3A: is a schematic sectional front view of a second embodiment of the attachment arrangement according to the first aspect of the invention;
- Figure 3B: is a schematic sectional side view of the attachment arrangement of figure 3A;
- Figure 4A: is a schematic sectional front view of a third embodiment of the attachment arrangement according to the first aspect of the invention;
- Figure 4B: is a schematic sectional side view of the attachment arrangement of figure 4A;
- Figure 5: is a schematic sectional front view of a fourth embodiment of the attachment arrangement according to the first aspect of the invention;
- Figure 6: is a schematic sectional side view of the attachment arrangement of figure 5;
- Figure 7: is a schematic sectional side view of the attachment arrangement of figures 5 and 6 when applied to a structure of a building;
- Figure 8A: is a schematic sectional front view of a fifth embodiment of the attachment arrangement according to the first aspect of the invention;
- Figure 8B: is a schematic sectional side view of the attachment arrangement of figure 8A;
- Figure 8C: is a schematic sectional side view of another embodiment of the attachment arrangement according to the first aspect of the invention;
- Figure 9: is a schematic sectional front view of a sixth embodiment of the attachment arrangement according to the first aspect of the invention;
- Figure 10: is a schematic sectional side view of the attachment arrangement of figure 9;
- Figure 11: is a schematic sectional side view of the attachment arrangement of figures 9 and 10 when applied to a structure of a building;
- Figure 12: is a schematic sectional front view of a seventh embodiment of the attachment arrangement according to the first aspect of the invention; and
- Figure 13: is a schematic sectional side view of the attachment arrangement of figure 12.

### Detailed Description

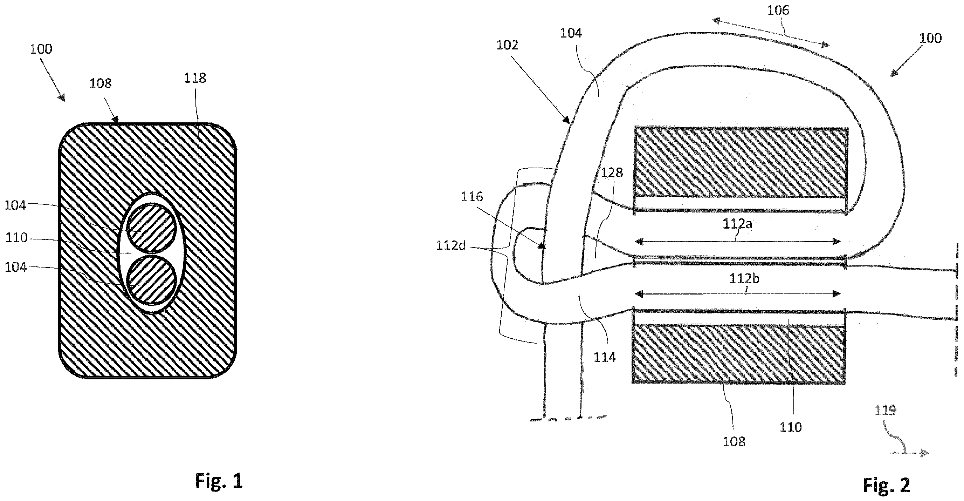

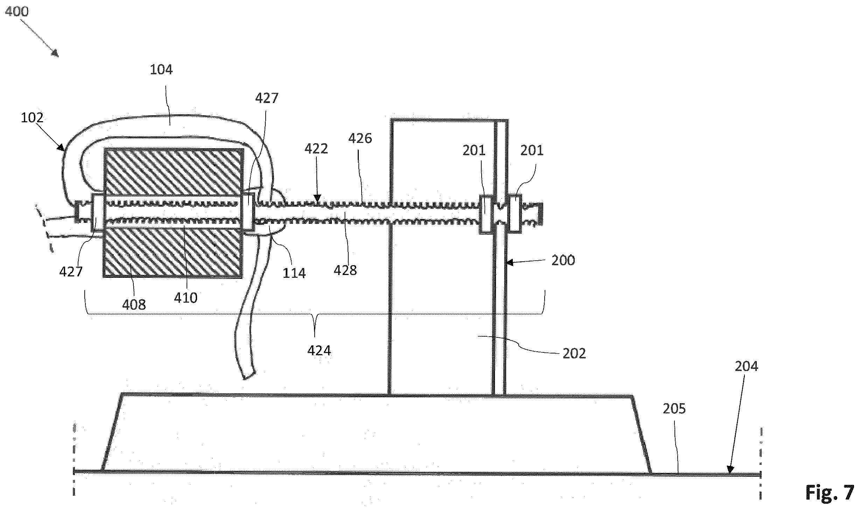

With reference to figures 1 and 2, a first embodiment of the attachment arrangement 100 for the attachment of a first element 102 to a second element 200 (see figure 7) is schematically illustrated. The first element 102 includes a wire 104 having a longitudinal extension 106. The attachment arrangement 100 includes the first element 102 and an attachment member 108. The attachment member 108 is attachable to the wire 104 of the first element 102. Further, the attachment member 108 is, directly or indirectly, attachable to the second element 200 (see figure 7). For some example, the attachment member 108 may be attached to the second element 200 by way of any kind of suitable means of attachment, such as one or more bolts 428, nuts 201, screws, rivets, and/or clamps, or other means of attachment. For some embodiments, the attachment arrangement 100 may be described as an attachment arrangement for attaching an end, or end portion, of a wire 104 to a second element 200.

With reference to figures 1 and 2, the attachment member 108 forms one or more through-holes 110, openings, or channels. One or more of the one or more through-holes 110 is/are configured to receive one or more longitudinal portions 112a-b of the wire 104, for example two or more longitudinal portions 112a-b of the wire 104. In one or more of the one or more through-holes 110 the attachment member 108 is configured to hold, or holds, two or more longitudinal portions 112a-b of the wire 104 for forming a first loop 114 of the wire 104. The first loop 114 of the wire 104 is positioned at least partly outside the one or more through-holes 110. For some embodiments, the first loop 114 of the wire 104 may be positioned outside the one or more through-holes 110. The attachment arrangement 100 comprises a locking member 116. The first loop 114 of the wire 104 is configured to receive, or receives, the locking member 116 so as to lock the wire 104 in relation to the attachment member 108. Thus, by the locking member 116, the first loop 114 is maintained and prevents an end of the wire 104 from sliding or moving in relation to the attachment member 108. For some embodiments, the first loop 114 of the wire 104 is configured to hold, or holds, the locking member 116.

With reference to figures 1 and 2, for some embodiments, the attachment member 108 may be formed from a block 118 and the one or more through-holes 110 may be formed by drilling into and through the block 118. For other embodiments, the attachment member 108 may be casted, or formed in any other manner.

With reference to figures 1 and 2, for some embodiments, the wire 104 comprises the locking member 116, wherein the locking member 116 comprises, or is, a second longitudinal portion 112d of the wire 104. For some embodiments, it may be defined that the locking member 116, or that the second longitudinal portion 112d, comprises, or is, an end portion 112d of the wire 104. When the long wire 104 on the side of the attachment member 108 opposite to the side having the first loop 114 is pulled in a direction 119 away from the attachment member 108 or away from the first loop 114, the size of the opening 128 of the first loop 114 will be reduced, whereby the first loop 114 will tighten around the second longitudinal portion 112d of the wire 104, which forms the locking member 116, and thus lock the second longitudinal portion 112d of the wire 104, whereby any movement of the second longitudinal portion 112d of the wire 104 in the direction of its longitudinal extension 106 is prevented or radically minimized. Thus, an efficient attachment of the wire 104 is attained.

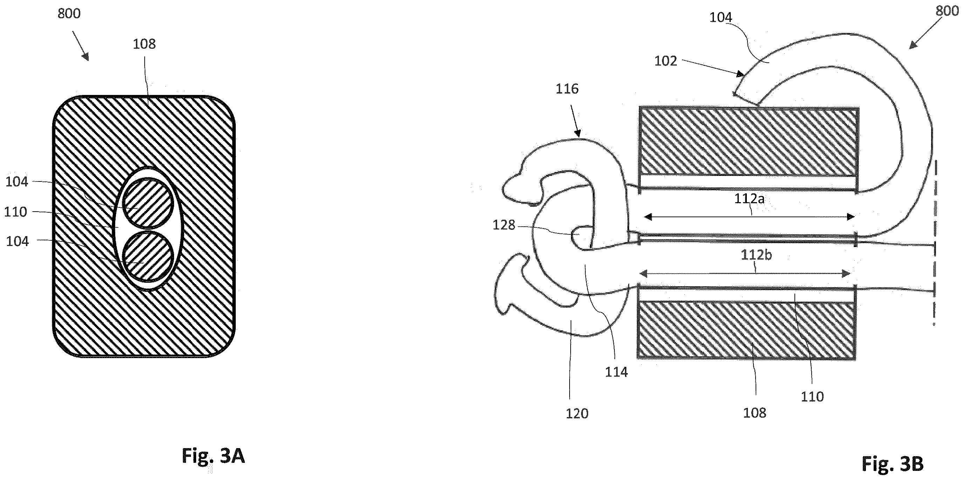

With reference to figures 1 and 2, for illustrative purposes, only a short, or reduced, longitudinal extension, or length, of the wire 102 is illustrated. However, it is to be understood that the wire 104 may extend a considerable length in the direction 119 away from the attachment member 108. The same applies for the other embodiments illustrated in figures 3 to 13.

With reference to figures 3A-B, a second embodiment of the attachment arrangement 800 for the attachment of a first element 102 to a second element 200 (see figure 7) is schematically illustrated. The attachment arrangement 800 of figures 3A-B differs from the attachment arrangement 100 of figures 1 and 2 in that the locking member 116 comprises a locking piece 120 and not a second longitudinal portion 112d of the wire 104. Thus, for some embodiments, the locking member 116 may be defined as a separate member 120 distinguished from, i.e. not a portion 112d of the wire 104 and/or of the attachment member 108. However, for some embodiments, the locking piece 120 may be attached or connected to the attachment member 108. For some embodiments, the locking piece 120 may be straight, U-shaped or substantially annular. For some embodiments, the locking piece 120 may have one or more heads having a width exceeding the width of the rest of the locking piece 120. For some embodiments, the locking piece 120 may comprise, or be, a locking pin. For some embodiments, the locking piece 120 may comprise an attachment element 422, such as a bolt 428 or screw, for example as disclosed in figure 7. Otherwise, other features of the second embodiment of the attachment arrangement 800 illustrated in figures 3A-B may correspond to features of the first embodiment of the attachment arrangement 100 illustrated in figures 1 and 2 and are thus not repeated here.

For some embodiments, the locking member 116 may be, or comprise, a portion of the attachment member 108. Thus, for some embodiments, a locking piece 120 as disclosed above and a second longitudinal portion 112d of the wire 104 acting as a locking member 116 may be excluded.

In the embodiments of figures 1, 2 and 3A-B, the attachment member 108 forms one through-hole 110, wherein the through-hole 110 is configured to receive two longitudinal portions 112a-b of the wire 104, and wherein in the through-hole 110 the attachment member 108 is configured to hold the two longitudinal portions 112a-b of the wire 104 so as to form the first loop 114 of the wire 104.

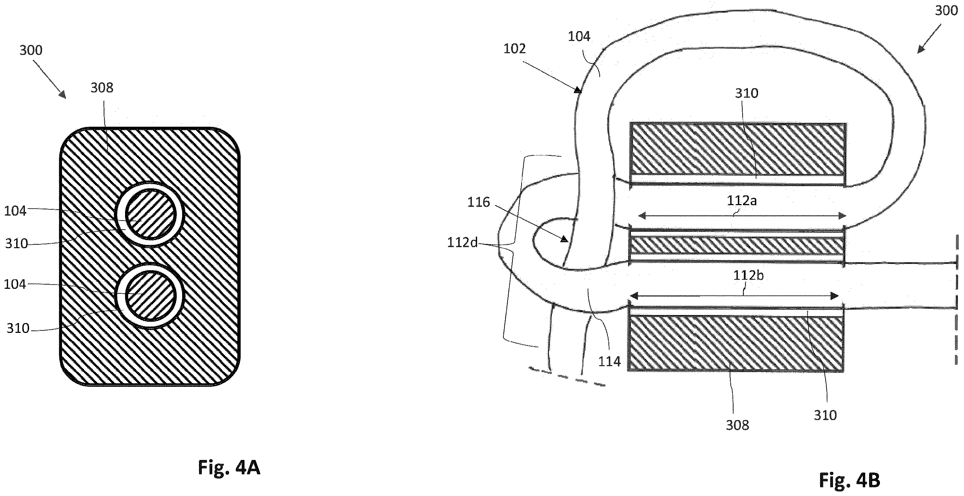

With reference to figures 4A-B, a third embodiment of the attachment arrangement 300 for the attachment of a first element 102 to a second element 200 (see figure 7) is schematically illustrated. The attachment arrangement 300 of figures 4A-B differs from the attachment arrangement 100 of figures 1 and 2 in that the attachment member 308 forms two or more through-holes 310, wherein in each one 310 of two or more of the two or more through-holes 310 the attachment member 308 is configured to hold a longitudinal portion 112a-b of the wire 104. More specifically, in the embodiment of figures 4A-B, the attachment member 308 forms two through-holes 310. Otherwise, other features of the third embodiment of the attachment arrangement 300 illustrated in figures 4A-B may correspond to features of the first embodiment of the attachment arrangement 100 illustrated in figures 1 and 2. The width of the though-hole 110; 310 may be adapted to the width of the wire 104. The though-hole 110; 310 may have various shapes and cross-sections.

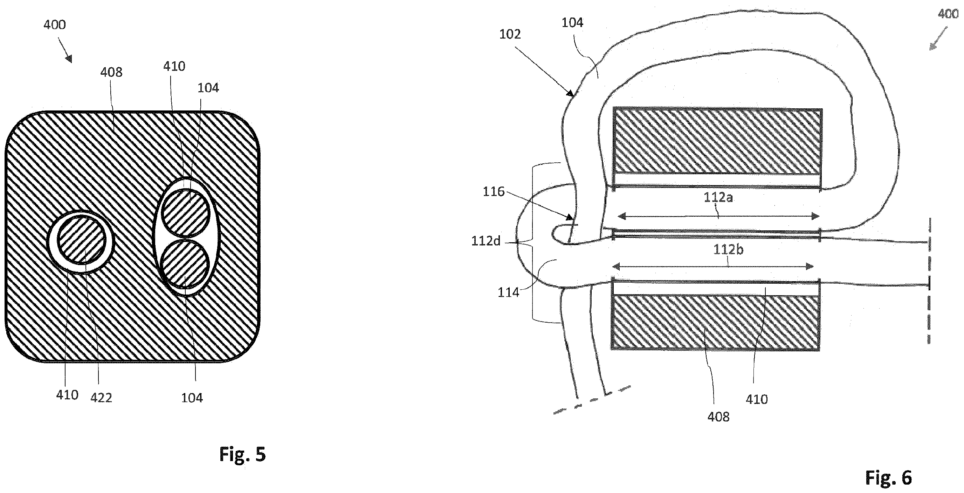

With reference to figures 5 to 7, a fourth embodiment of the attachment arrangement 400 for the attachment of a first element 102 to a second element 200 (see figure 7) is schematically illustrated. The attachment arrangement 400 of figures 5 and 6 differs from the attachment arrangement 100 of figures 1 and 2 in that the attachment member 408 forms two or more through-holes 410, wherein one 410 of the two or more through-holes 410 is configured to receive and hold an attachment element 422 attachable to the second element 200. More specifically, in the embodiment of figures 5 and 6, the attachment member 408 forms two through-holes 410. For some embodiments, the attachment arrangement 400 may include the attachment element 422. With reference to figure 7, for some embodiments, it may be defined that the attachment element 422 has a longitudinal extension 424. For some embodiments, the attachment element 422 may have one or more external threads 426. For some embodiments, the attachment element 422 may be rigid. For other embodiments, the attachment element may be bendable or flexible. For some embodiments, it may be defined that said one 410 of the two or more through-holes 410 configured to receive and hold the attachment element 422 has one or more inner surfaces, wherein the inner surface of said through-hole 410 may form one or more internal threads, and wherein said one or more internal threads is/are configured for the engagement with the external thread 426 of the attachment element 422. However, the inner surface of said through-hole 410 may also be without any internal threads, and may, for example, be smooth. For some embodiments, the attachment element 422 may be configured to cooperate and engage with one or more nuts 427 having one or more internal threads so as to attach the attachment element 422 to the attachment member 408 and/or to the second element 200. For some embodiments, the attachment element 422 may be adjustably attachable to the second element 200 and/or to the attachment member 408, so as to adjust the distance between the attachment member 408 and the second element 200, and thus adjust the opening 128 of the first loop 114, such as reduce the size of the opening 128 of the first loop 114. Otherwise, other features of the fourth embodiment of the attachment arrangement 400 illustrated in figures 5 to 7 and may correspond to features of the first embodiment of the attachment arrangement 100 illustrated in figures 1 and 2. The length of the longitudinal extension 424 of the attachment element 422 may vary and be adapted to various applications. For some embodiments, the attachment element 422 may be, or comprise, a bolt 428 or screw.

With reference to figure 7, the embodiment of the attachment arrangement 400 of figures 5 and 6 is illustrated when attached to the second element 200. For some embodiments, one or more of the attachment member 408 and attachment element 422 may be directly or indirectly attachable to the second element 200. For some embodiments, the second element 200 may comprise a bracket 202, or a console, directly or indirectly attachable to a structure 204 of a building. For some embodiments, the structure 204 of the building may comprise a roof 205 or a wall of a building, or any other structure of the building. For some embodiments, the attachment arrangement 400 may be provided with a cover, for example made of a sheet of metal or metal alloy, configured to cover one or more of the attachment member 408 and attachment arrangement 400 so as to protect it/them, from, for example, rain, snow and/or dirt.

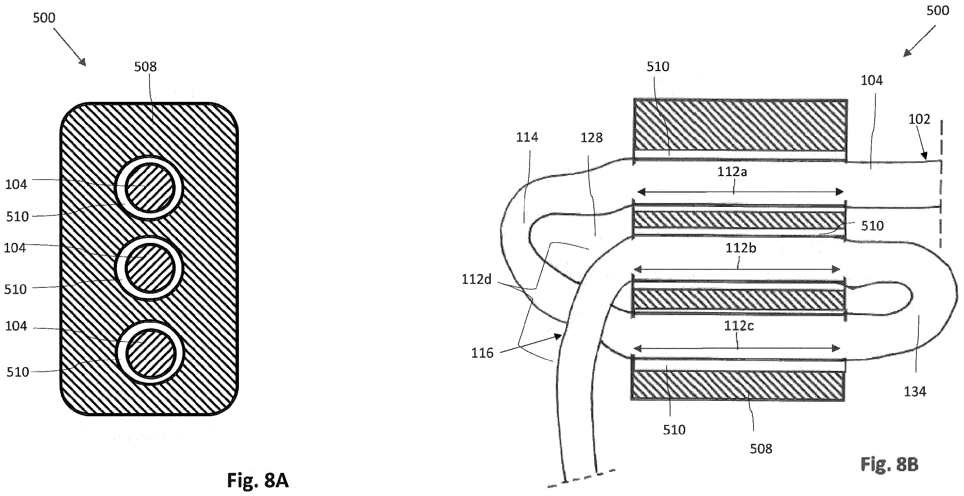

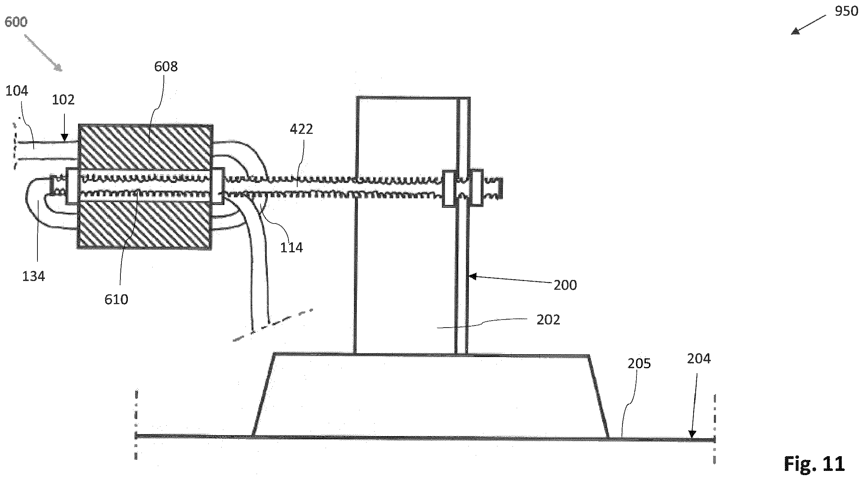

With reference to figures 8A-B, a fifth embodiment of the attachment arrangement 500 for the attachment of a first element 102 to a second element 200 (see figure 11) is schematically illustrated. The first element 102 comprises a wire 104 having a longitudinal extension 106. The attachment arrangement 500 includes the first element 102 and an attachment member 508 attachable to the wire 104 of the first element 102. The attachment member 508 is attachable to the second element 200. The attachment member 508 forms three or more through-holes 510. Three or more of the three or more through-holes 510 are configured to receive one or more longitudinal portions 112a-c of the wire 104, for example three or more longitudinal portions 112a-c of the wire 104. In each one 510 of the three or more of the three or more through-holes 510 the attachment member 508 is configured to hold a longitudinal portion 112a-c of the wire 104 for forming a first loop 114 of the wire 104 and for forming a second loop 134 of the wire 104, the first loop 114 being positioned at least partly outside the one or more through-holes 510, so as to lock the wire 104 in relation to the attachment member 508.

For some embodiments, the attachment arrangement 500; 600; 700; 900 may include one or more locking members 116, 116b, wherein the first loop 114 of the wire 104 may be configured to receive the locking member 116 so as to lock the wire 104 in relation to the attachment member 408; 508; 608; 708.

The attachment arrangement 500 of figures 8A-B differs from the attachment arrangement 100 of figures 1 and 2 at least in that in one or more of the one or more through-holes 510 the attachment member 508 is configured to hold three or more longitudinal portions 112a-c of the wire 104 for forming a second loop 134 of the wire 104 and the first loop 114 of the wire 104. Further, the attachment arrangement 500 of figures 8A-B differs from the attachment arrangement 100 of figures 1 and 2 in that the attachment member 508 forms three or more through-holes 510, more specifically three through-holes 510 in the embodiment illustrated in figures 8A-B. As mentioned above, in each one of the three or more of the three or more through-holes 510 the attachment member 508 is configured to hold a longitudinal portion 112a-c of the wire 104 for forming a second loop 134 of the wire 104 and the first loop 114 of the wire 104. The second loop 134 of the wire 104 may be positioned at least partly outside the three or more through-holes 510. For some embodiments, the second loop 134 of the wire 104 may be positioned outside the three or more through-holes 510. Otherwise, other features of the fifth embodiment of the attachment arrangement 500 illustrated in figures 8A-B may correspond to features of the first embodiment of the attachment arrangement 100 illustrated in figures 1 and 2.

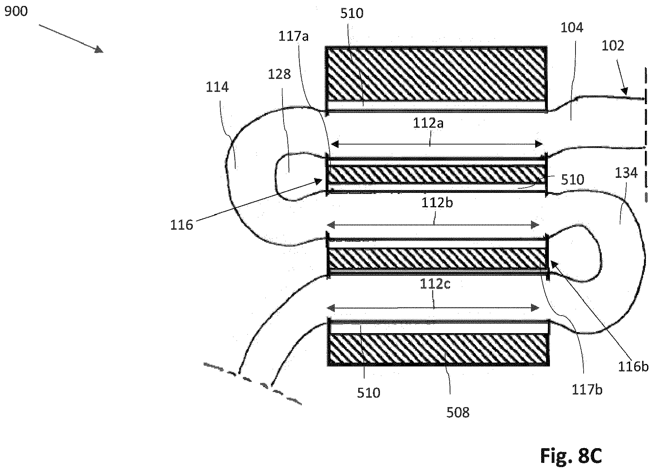

With reference to figure 8C, for some embodiments, the locking member 116 may comprise one or more portions 117a, 117b of the attachment member 508. For some embodiments, the attachment arrangement 900 may comprise a second locking member 116b, wherein the second loop 134 of the wire 104 is configured to receive the second locking member 116b so as to lock the wire 104 in relation to the attachment member 508. For some embodiments, the second locking member 116b may comprise a second portion 117b of the attachment member 508.

With reference to figures 8C, another embodiment of the attachment arrangement 900 for the attachment of a first element 102 to a second element 200 (see figure 11) is schematically illustrated. The attachment arrangement 900 of figures 8C differs from the attachment arrangement 500 of figures 8A-B in that the attachment arrangement 900 of figure 8C does not have a second longitudinal portion 112d of the wire 104 acting as a locking member 116. Instead, the locking member 116 comprises one or more portions 117a, 117b, for example one portion 117a, of the attachment member 508. For some embodiments, it may be defined that the attachment arrangement 900 includes a second locking member 116b, wherein the second loop 134 of the wire 104 is configured to receive the second locking member 116b so as to lock the wire 104 in relation to the attachment member 508, and wherein the second locking member 116b comprises a second portion 117b of the attachment member 508.

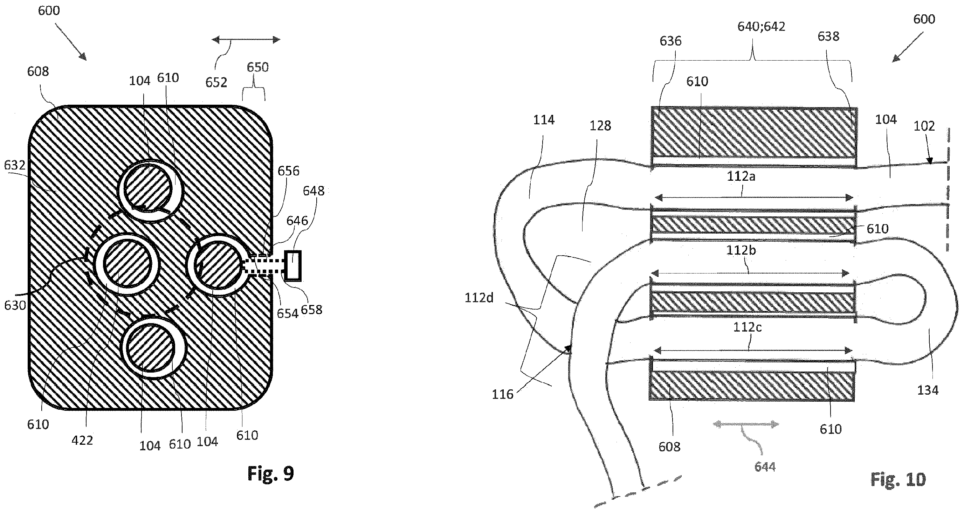

With reference to figures 9 to 11, a sixth embodiment of the attachment arrangement 600 for the attachment of a first element 102 to a second element 200 (see figure 11) is schematically illustrated. The attachment arrangement 600 of figures 9 to 11 differs from the attachment arrangement 400 of figures 5 and 6 at least in that the attachment member 608 forms four or more through-holes 610, more specifically four through-holes 610 in the embodiment illustrated in figures 9 to 11. One 610 of the four or more through-holes 610 is configured to receive and hold an attachment element 422 attachable to the second element 200 (see figure 11). For some embodiments, it may be defined that the attachment member 608 includes a central portion 630 and an outer portion 632 surrounding the central portion 630, wherein the central portion 630 forms the through-hole 610 configured to receive and hold the attachment element 422. In each one of three of the four through-holes 610 the attachment member 608 is configured to hold a longitudinal portion 112a-c of the wire 104 for forming a second loop 134 of the wire 104 and the first loop 114 of the wire 104. As mentioned above, for some embodiments, the second loop 134 of the wire 104 may be positioned at least partly outside the through-holes 610.

With reference to figures 9 and 10, for some embodiments, it may be defined that the attachment member 608 has a first end portion 636 (or a first end) and a second end portion 638 (or a second end), and that the attachment member 608 has a longitudinal extension 640 extending from the first end portion 636 to the second end portion 638. Each one of the one or more through-holes 610, or each one of the four through-holes 610, may be described to have a longitudinal extension 642 extending in the direction 644 of the longitudinal extension 640 of the attachment member 608. For some embodiments, the attachment member 608 may form a channel 646 which opens to one 610 of the one or more through-holes 610, or to one 610 of the four through-holes 610. The channel 646 is configured to receive an attachment unit 648 for locking one 112a-c or more longitudinal portions 112a-c of the wire 104 held in the through-hole 610 to which the channel 646 opens. For some embodiments, it may be defined that the channel 646 has a longitudinal extension 650 extending in a direction 652 transverse to the direction 644 of the longitudinal extension 640 of the attachment member 608. For some embodiments, it may be defined that the channel 646 has, or forms, one or more inner surfaces 654. The inner surface 652 of the channel 646 may comprises, or form, one or more internal threads 656, the one or more internal threads 656 being configured for the engagement with one or more external threads 658 of the attachment unit 648. The attachment unit 648 may comprise a screw of a bolt. For other embodiments, the attachment unit 648 may comprise a rivet, a clamping member, or any other unit configured to interact with one or more longitudinal portions 112a-c of the wire 104 so as to lock it or them. For some embodiments, the attachment arrangement 600 may include the attachment unit 648. Otherwise, other features of the sixth embodiment of the attachment arrangement 600 illustrated in figures 9 to 11 may correspond to features of the fourth embodiment of the attachment arrangement 400 illustrated in figures 5 and 6.

With reference to figure 11, the embodiment of the attachment arrangement 600 of figures 9 and 10 is illustrated when attached to the second element 200 and applied to a structure 204 of a building, such as a roof 205.

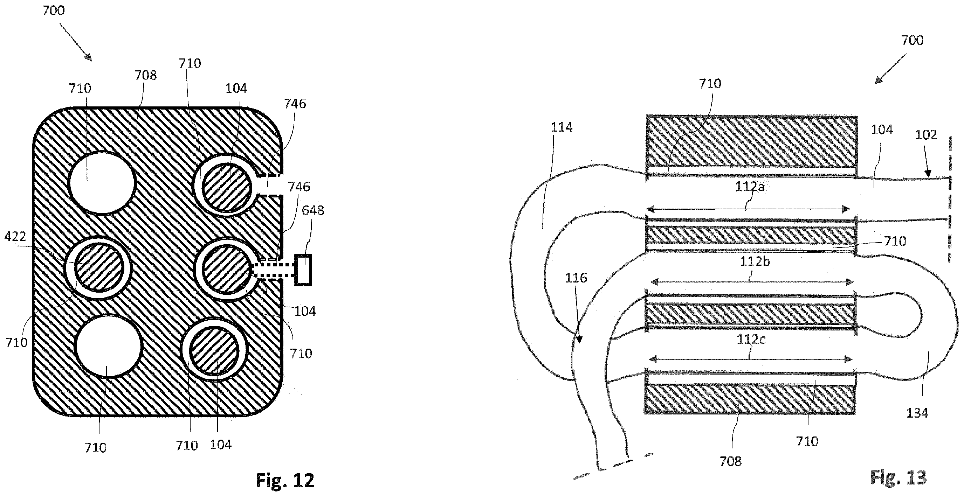

With reference to figures 12 and 13, a seventh embodiment of the attachment arrangement 700 for the attachment of a first element 102 to a second element 200 (see figure 11) is schematically illustrated. The attachment arrangement 700 of figures 12 and 13 differs from the attachment arrangement 600 of figures 9 and 10 at least in that the attachment member 708 forms six or more through-holes 710, more specifically six through-holes 710 in the embodiment illustrated in figures 12 and 13. Further, the attachment member 708 forms two channels 746. The two channels 746 open to different through-holes 710. Otherwise, each one of the channels 746 in figure 12 may correspond to the channel 646 of figure 9. Otherwise, other features of the seventh embodiment of the attachment arrangement 700 illustrated in figures 12 and 13 may correspond to features of the sixth embodiment of the attachment arrangement 600 illustrated in figures 9 and 10.

For some embodiments, the attachment member 108, 308, 408, 508, 608, 708 may be made of a material comprising or consisting of a metal or a metal alloy, for example aluminium, or any other metal. The attachment member 108, 308, 408, 508, 608, 708 may have various shapes different from the ones disclosed above and illustrated in figures 1 to 13. For example, the attachment member may have a circular or oval cross-section, or any other cross-section. For some embodiments, the attachment arrangement 100, 800, 300, 400, 500, 600, 700, 900 may include the second element 200.

With reference to figure 11, an embodiment of the installation 950 according to the second aspect of the invention is schematically illustrated. The installation 950 includes a structure 204 of a building. The installation 950 includes the second element 200, which is attached to the structure 204. The installation 950 includes an attachment arrangement 500; 600; 700; 900 according to any one of the embodiments disclose above, wherein the structure 204 includes one or more of a roof 205 and wall.

Further, with reference to figures 7 and 11, a roof or wall installation, such as a roof installation, comprising one or more attachment arrangements 100, 800, 300, 400, 500, 600, 700, 900 according to any one of the embodiments disclosed above is also provided. Further, a roof 205 or wall arrangement comprising a roof 205 or wall, for example a roof arrangement comprising a roof 205 is provided. The roof 205 or wall arrangement comprises one or more of the group of: an attachment arrangement 100, 800, 300, 400, 500, 600, 700, 900 according to any one of the embodiments disclosed above; and a roof 205 or wall installation according to any one of the embodiments disclosed above.

Although the embodiments of the attachment arrangement 100, 800, 300, 400, 500, 600, 700, 900 disclosed above are illustrated when applied to a roof or wall, it is to be understood that embodiments of the attachment arrangement 100, 800, 300, 400, 500, 600, 700, 900 may be applied to other structures of a building.

The present invention is not limited to the above-described embodiments. Instead, the present invention relates to, and encompasses all different embodiments being included within the scope of the appended independent claim.

## Claims

1. An attachment arrangement (500; 600; 700; 900) for the attachment of a first element (102) to a second element (200), the first element (102) comprising a wire (104) having a longitudinal extension (106), wherein the attachment arrangement (500; 600; 700; 900) comprises
the first element (102), and
an attachment member (508; 608; 708) attachable to the wire (104) of the first element (102),
wherein the attachment member (508; 608; 708) is attachable to the second element (200),
wherein the attachment member (508; 608; 708) forms three or more through-holes (510; 610; 710),
wherein three or more of the three or more through-holes (510; 610; 710) are configured to receive one or more longitudinal portions (112a-c) of the wire (104), and
wherein in each one (510; 610; 710) of the three or more of the three or more through-holes (510; 610; 710) the attachment member (508; 608; 708) is configured to hold a longitudinal portion (112a-c) of the wire (104) for forming a first loop (114) of the wire (104) and a second loop (134) of the wire (104), the first loop (114) being positioned at least partly outside the three or more through-holes (510; 610; 710), so as to lock the wire (104) in relation to the attachment member (508; 608; 708).

2. An attachment arrangement (500; 600; 700; 900) according to claim 1, wherein the attachment arrangement (500; 600; 700; 900) comprises one or more locking members (116; 116b), and
wherein the first loop (114) of the wire (104) is configured to receive the locking member (116) so as to lock the wire (104) in relation to the attachment member (408; 508; 608; 708).

3. An attachment arrangement (500; 600; 700; 900) according to claim 2, wherein the locking member (116, 116b) comprises one or more portions (117a, 117b) of the attachment member (508; 608; 708).

4. An attachment arrangement (500; 600; 700; 900) according to claim 2, wherein the locking member (116) comprises a locking piece (120).

5. An attachment arrangement (500; 600; 700; 900) according to claim 2, wherein the wire (104) comprises the locking member (116), and
wherein the locking member (116) comprises a second longitudinal portion (112d) of the wire (104).

6. An attachment arrangement (500; 600; 700; 900) according to any one of the claim 1 to 5, wherein one (510; 610; 710) of the three or more through-holes (510; 610; 710) is configured to receive and hold an attachment element (422) attachable to the second element (200).

7. An attachment arrangement (600) according to claim 6, wherein the attachment member (608) comprises a central portion (630) and an outer portion (632) surrounding the central portion (630), and
wherein the central portion (630) forms the through-hole (610) configured to receive and hold the attachment element (422).

8. An attachment arrangement (500; 600; 700; 900) according to claim 6 or 7, wherein the attachment element (422) has a longitudinal extension (424) and one or more external threads (426).

9. An attachment arrangement (600; 700) according to any one of the claims 1 to 8, wherein the attachment member (608; 708) forms four or more through-holes (610; 710), and
wherein one (610; 710) of the four or more through-holes (610; 710) is configured to receive and hold an attachment element (422) attachable to the second element (200).

10. An attachment arrangement (500; 600; 700; 900) according to any one of the claim 1 to 9, wherein one or more of the attachment member (508; 608; 708) and attachment element (422) is/are attachable to the second element (200) which comprises a bracket (202) attachable to a structure (204) of a building.

11. An attachment arrangement (500; 600; 700; 900) according to any one of the claim 1 to 10, wherein the attachment member (608) comprises a first end portion (636) and a second end portion (638),
wherein the attachment member (608) has a longitudinal extension (640) extending from the first end portion (636) to the second end portion (638), and
wherein each one (610) of the three or more through-holes (610) has a longitudinal extension (642) extending in the direction (644) of the longitudinal extension (640) of the attachment member (608).

12. An attachment arrangement (600; 700) according to any one of the claims 1 to 11, wherein the attachment member (608; 708) forms a channel (646; 746) which opens to one (610); 710 of the three or more through-holes (610; 710), and
wherein the channel (646; 746) is configured to receive an attachment unit (648) for locking one or more longitudinal portions (112a-c) of the wire (104) held in the through-hole (610; 710) to which the channel (646; 746) opens.

13. An attachment arrangement (600; 700) according to claim 12, wherein the channel (646) has a longitudinal extension (650) extending in a direction (652) transverse to the direction (644) of the longitudinal extension (640) of the attachment member (608).

14. An attachment arrangement (600; 700) according to claim 12 or 13, wherein the channel (646) comprises one or more inner surfaces (654),
wherein the inner surface (654) comprises one or more internal threads (656), and
wherein the one or more internal threads (656) is/are configured for the engagement with one or more external threads (658) of the attachment unit (648).

15. An installation (950) comprising
a structure (204) of a building,
said second element (200), which is attached to the structure (204), and
an attachment arrangement (500; 600; 700; 900) according to any one of the claims 1 to 14, wherein the structure (204) comprises one or more of a roof (205) and wall.
